# EUROPEAN PATENT APPLICATION

(11) **EP 3 459 407 A1**
(43) Date of publication of application: **27.03.2019**
(21) Application number: 18194212.9
(22) Date of filing: 13.09.2018
(51) Int. Cl.: A47J 37/07

(54) **SINGLE VALVE FOR GAS GRILL WITH MULTIPLE BURNERS**

(30) Priority: 25.09.2017 US 201715695123
(71) Applicant: Weber-Stephen Products, LLC, Palatine, IL 60067 (US)
(72) Inventor: KALISIAK, Anton, Palatine, IL Illinois 60067 (US)
(74) Representative: FRKelly

(57) **Abstract**

A gas delivery system (10) for gas grills is provided, the delivery system including one gas valve (30) that controls the gas flow to a plurality of burner tubes (17,18,19).

## Description

### FIELD OF THE INVENTION

The present inventions relate to gas grills. In particular, the present inventions relate to gas grills having a gas delivery system with one valve that controls multiple burners to easily enable a wide range of cooking conditions.

### BACKGROUND OF THE INVENTION

Grilling is exceedingly popular. The use of gas grills is also extremely popular for a variety of reasons. For example, some grillers don't like the mess of charcoal and particularly, lighting or starting the charcoal. Some grillers also like the control and relative ease of use of gas grills.

Typical gas grills include a cooking chamber or firebox to which a lid is hinged. The firebox is usually supported on a cart or stand for ease of use. The firebox houses a plurality of burner tubes or burners that provide gas to be ignited inside of the firebox. Most gas grills have at least two, and up to six or more, burners. Cooking grates and other heat distribution members are also provided, most of which are typically supported above the burner tubes.

Each burner tube is typically in fluid communication with a valve that sits outside of the firebox adjacent to the corresponding burner tube. A gas supply manifold communicates with each valve and is ultimately connected to a gas source, such as a tank or natural gas line. Each valve includes a knob that the user uses to adjust the flow of gas to the particular burner tube from off to high.

By adjusting the gas flow to each burner, a user may adjust the cooking temperature and/or conduct direct or indirect cooking. Using a typical three burner gas grill as an example, a user could adjust all three burners to the same setting, or adjust the settings of each of the burners to different settings. This is typically direct cooking. In addition, one or more burners may be left off (or extremely low), for example, the center burner. In this manner, a user may use indirect cooking methods.

Some users of gas grills may find adjusting all of the individual burners to different settings to be overly complicated. This may be particularly true for first time or infrequent grillers. Accordingly, there is a need for a gas delivery system that provides simplified control of multiple burners using one valve and its associated knob.

The present inventions provide for easy manual control of a gas grill having multiple burner tubes, all of which are under the control of a single valve. The present inventions also provide for a simple way to switch between direct and indirect cooking methods.

### SUMMARY OF THE INVENTION

The present inventions preserve the advantages of known gas delivery systems for gas grills and also provide new features and advantages.

Accordingly, it is an object of the present invention to provide a gas delivery system using one valve that controls the flow of gas to all burners.

It is an additional object of the present invention to provide a gas delivery system that permits a user to select direct or indirect cooking using a single valve.

In accordance with the objects, features and advantages of the present invention, a gas delivery system for a gas grill having a firebox with a front and a back portion is provided. A preferred system includes a plurality of burner tubes that extend into the firebox from the front portion to the back portion (it being understood that the burner tubes may extend between two sides of the firebox in a side controlled grill); a gas control valve, the control valve having a gas inlet and a plurality of gas outlets coinciding in number with the plurality of burner tubes; a gas line from each gas outlet of the control valve to a corresponding burner tube, whereby the amount of gas delivered to a particular burner tube is dependent upon the adjustment of the control valve.

The preferred gas control valve of the present invention includes a valve stem operably coupled to a control cone having a plurality of apertures, such that the amount of gas delivered to a particular burner tube is adjusted by turning the valve stem and aligning the desired apertures of the control cone with the desired gas outlet. In addition, adjustment of the gas control valve enables the plurality of burners to provide different gas flows and also enables indirect cooking.

### INVENTOR'S DEFINITION OF THE TERMS

The terms used in the claims of this patent are intended to have their broadest meaning consistent with the requirements of law. Where alternative meanings are possible, the broadest meaning is intended. All words used in the claims are intended to be used in the normal, customary usage of grammar and the English language.

### BRIEF DESCRIPTION OF THE DRAWINGS

The stated and unstated objects, features and advantages of the present inventions (sometimes used in the singular, but not excluding the plural) will become apparent from the following descriptions and drawings, wherein like reference numerals represent like elements in the various views, and in which:
Figure 1 is a perspective view of a typical firebox of a gas grill and showing the principal components of the gas delivery system of the present invention;
Figure 1A is a top view of a typical burner tube arrangement of a gas grill that may be part of the gas delivery system of the present invention;
Figure 2 is a perspective view of a preferred valve of the present invention; and,
Figure 3 is an exploded perspective view of the valve of Figure 2 showing preferred internal components thereof.

### DETAILED DESCRIPTION OF PREFERRED EMBODIMENTS

Set forth below is a description of what is currently believed to be the preferred embodiments or best representative examples of the inventions claimed. Future and present alternatives and modifications to the embodiments and preferred embodiments are contemplated. Any alternatives or modifications which make insubstantial changes in function, purpose, structure or result are intended to be covered by the claims of this patent.

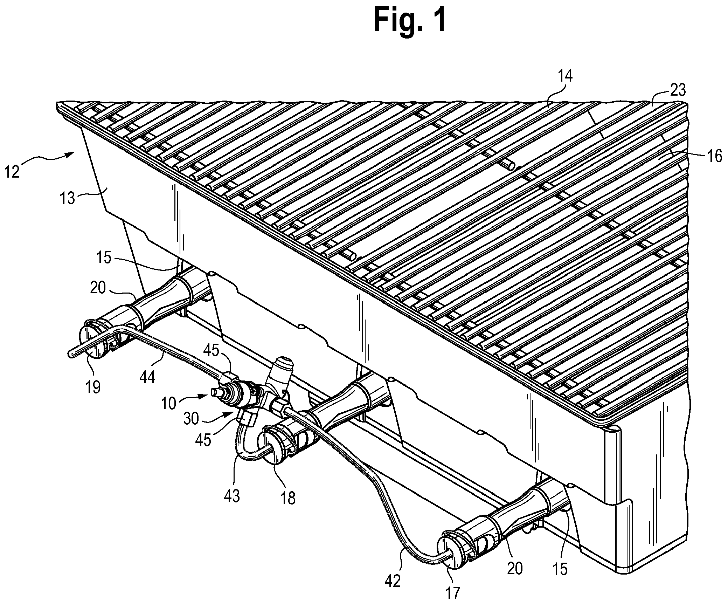

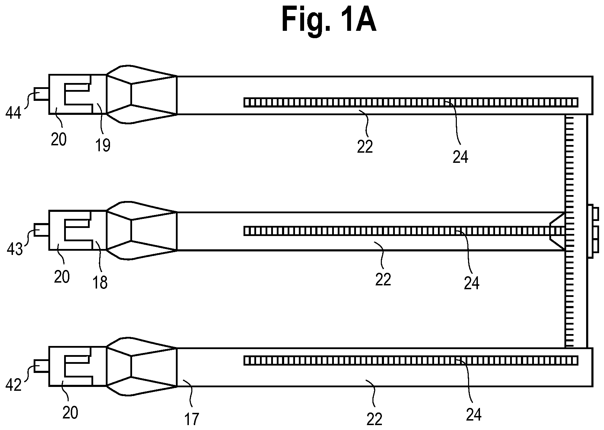

The one valve, multiple burner gas delivery system of the present inventions is shown as 10 in Figure 1 and is incorporated into a typical, three burner gas grill. A typical firebox 12 having a front portion 13 and a rear portion 23 of a typical gas grill is also shown. The firebox 12 typically supports a cooking grate 14 and other heat deflecting devices 16. Extending into the firebox 12 is a plurality of burner tubes 17, 18 and 19, also referred to herein as burners.

Burner tubes 17, 18 and 19 extend into firebox 12, typically through holes 15 in the front of firebox 12. Figure 1A shows a typical layout of burner tubes 17, 18 and 19 in a typical three burner grill extending from front 13 to back 23 of firebox 12. It will be understood by those of skill in the art that the burner tubes 17-19 may run from side to side (not shown) of the firebox 12. The preferred burner tubes 17-19 include a front portion 20 that sits outside of firebox 12. The remainder of the burner tube length 22 extends inside firebox 12 and is attached to the rear 23 of the firebox. The length of each burner tube 22 with the firebox 12 includes a plurality of ports 24 through which the gas flows and is ultimately ignited, as will be understood by those of skill in the art.

It will also be understood by those of skill in the art that a variety of mounting brackets and a control panel (none shown) are typically provided to support the front ends 20 of burner tubes 17, 18 and 19 and valve 30. In addition, the front end 20 of burner tubes 17-19 typically includes an air shutter and venturi to aid in the introduction and mixing of air into the gas as will also be understood by those of skill in the art.

The one valve, multiple burner gas delivery system 10 of the present inventions is shown and described herein by reference to a grill having three burner tubes 17-19 (see Figures 1 and 1A). The three burner tube 17-19 grill is only one embodiment used for exemplary purposes herein. It will be understood by those of skill in the art that the system 10 may be used on gas grills that have two, three or more burner tubes 17-19.

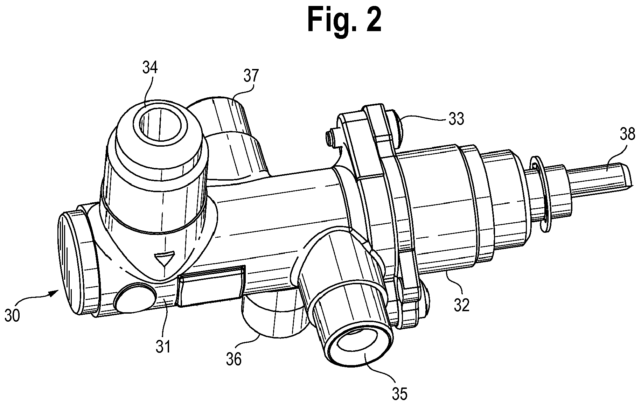

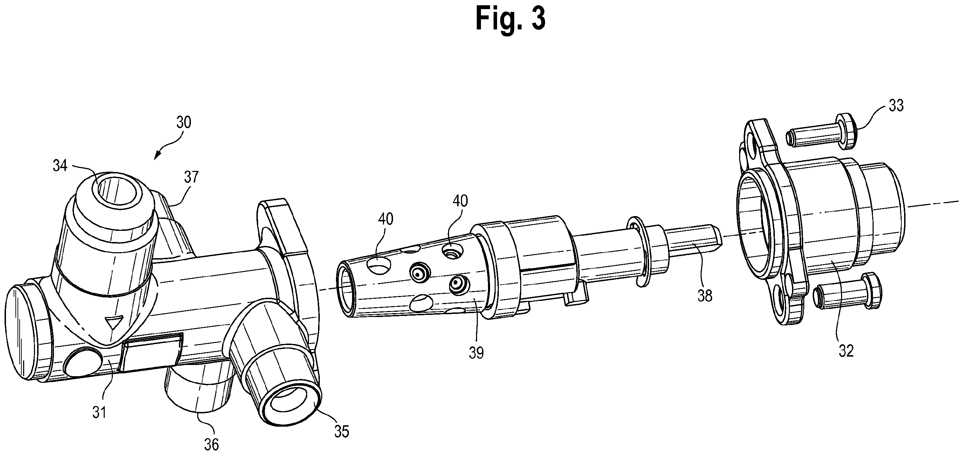

The control valve 30 of the present invention may best be seen by reference to Figures 2 and 3. Preferred valve 30 includes a valve body 31 and a valve head 32 that may be secured thereto with bolts 33 or other means of fastening. Valve body 31 includes a gas inlet 34 and gas outlets 35, 36 and 37. Consistent with the exemplary three burner embodiment discussed herein, preferred valve 30 has three gas outlets 35, 36 and 37. It will be understood that the number of outlets coincides with the number of burner tubes, i.e., 17, 18 and 19. For example, in a four burner tube 18 grill, there would be four gas outlets on valve body 31.

Each gas outlet 35, 36 and 37 is in fluid communication with each burner tube 17, 18 and 19, respectively, through an appropriate gas line 42, 43 and 44. In the described embodiment, right gas outlet 35 is connected to the right burner tube 17 through gas line 42 as shown in Figure 1. Similarly, the center gas outlet 36 is connected to center burner tube 18 via gas line 43, and left gas outlet 37 is connected to left burner tube 19 via gas line 44. Again, it will be understood that any additional burner tubes will also be connected to any additional gas outlets.

The end of gas lines 42, 43 and 44 that are proximal to valve body 31 may be connected to gas outlet 35, 36 and 37 with a threaded compression nut 45 as shown in Figure 1. It will be understood by those of skill in the art that other means exist for connecting the gas lines 42, 43 and 44 to gas outlets 35, 36 and 37. Similarly, the distal ends of gas lines 42, 43 and 44 may be connected to burner tubes 17, 18 and 19 via an orifice holder body (not shown) and retained within the burner tube by a clip and orifice holder as will be understood by those of skill in the art. It will also be understood that other means of connection are available. Finally, a gas supply line (not shown) is attached to the gas inlet 34 in a manner that will be understood by those of skill in the art. As is typical, the gas supply line (not shown) is connected to a gas source via a regulator or well known means.

Returning to the preferred valve 30 (see Figure 3), a valve stem 38 is provided. Attached to or as part of valve stem 38 is a control cone 39 having a plurality of apertures 40. Control cone 39 and its apertures 40 are internal to valve head 32 and valve body 31. The flow of gas (and hence temperature setting) to a particular gas outlet 35, 36 or 37 and to burner tubes 17-19 is determined by the position and size of the apertures 40 relative to a particular gas outlet 35, 36, 37 and the gas inlet 34, as will be understood by those of skill in the art.

For example, when in an off position, there are no apertures 40 aligned with the gas inlet 34 or gas outlets 35, 36 and 37. Thus, when valve stem 38 is in the off position, there is no gas flowing to any of the burner tubes 17-19. As discussed below, the size and position of apertures 40 determines the flow and/or amount of gas flow to each of the burner tubes 17-19 as desired by the grill designer.

The control of flow to each of the burner tubes 17-19 as controlled by rotating valve stem 38 of valve 30 and may best be understood by reference to a particular, non-limiting example.

Set forth below is a table of a representative gas control design using a single valve 30 of the present invention with a grill having three burner tubes 17-19:

| BURNER SETTING | VALVE (38) ROTATION | BURNER (17) | BURNER (18) | BURNER (19) |
|---|---|---|---|---|
| OFF | 0° | OFF | OFF | OFF |
| HIGH | 90° | 10500 BTU | 10500 BTU | 10500 BTU |
| MEDIUM | ∼160° | 7500 BTU | 7500 BTU | 7500 BTU |
| LOW | 225° | 5000 BTU | 5000 BTU | 5000 BTU |
| INDIRECT | 270° | 7500 BTU | OFF | 7500 BTU |

As set forth in the exemplary table, when in the high position, i.e., valve stem 38 (and its associated knob (not shown)) is rotated ninety degrees (90°), all three burners 17-19 receive maximum design gas flow. The BTU's associated with the various positions are exemplary and those of skill in the art will understand that burner tubes of differing BTU outputs are available depending upon the grill type and desired heat levels. At a medium setting, i.e., valve stem 38 rotated approximately one hundred sixty degrees (160°), all of the burners are at a medium BTU setting. And when valve stem 38 is rotated approximately two hundred twenty-five degrees (225°), all of the burner tubes 17-19 are at their low heat BTU setting. Thus, a user may determine the temperature of direct cooking.

When indirect cooking is desired, valve stem 38 is rotated approximately two hundred seventy degrees (270°). In this position, right 17 and left 19 burner tubes are at medium heat and BTU setting. The center burner tube 18 is off and not receiving any gas flow. In a preferred embodiment, the valve stem 38 has at least three positional detents, for example, at the high, low and indirect cooking positions. It will be understood by those of skill in the art that more or fewer detent positions may be incorporated.

To accomplish the desired settings, either with or without a detent, the apertures 40 in control cone 39 of valve 30 are sized and positioned to obtain the desired gas flow to the particular burner tube 17-19. In a high setting, for example, a large aperture 40 is aligned with the gas outlets 35-37 when high gas flow to the burners is desired. At a low setting, a smaller aperture 40 is aligned with the particular gas outlet 35-37 to deliver the desired low gas flow. And, in the indirect cooking setting, a medium aperture 40 is aligned with burner tubes 17 and 19 while no aperture 40 is aligned with center burner tube 18 so that no gas flows to it. It will be understood by those of skill in the art that a designer may select any variation to the gas flow to a particular burner tube 17-19 by properly locating an appropriately sized aperture 40 to align with a particular gas outlet 35-37. As a non-limiting example, it may be desired to have the right and center burner tubes 17 and 18 receive no gas flow (off) and the left burner tube 19 receive the maximum gas flow (high). Of course, all of the burner tubes 17-19 do not have to be at the same setting. One burner 17 could be at high and two burners 18 and 19 could be at low. Other variations are possible depending upon particular design considerations, as will be understood by those of skill in the art.

The above description is not intended to limit the meaning of the words used in or the scope of the following claims that define the invention. Rather, it is contemplated that future modifications in structure, function or result will exist that are not substantial changes and that all such insubstantial changes in what is claimed are intended to be covered by the claims. Thus, while preferred embodiments of the present inventions have been illustrated and described, it will be understood that changes and modifications can be made without departing from the claimed invention. In addition, although the term "claimed invention" or "present invention" is sometimes used herein in the singular, it will be understood that there are a plurality of inventions as described and claimed.

Various features of the present inventions are set forth in the following claims.

## Claims

1. A gas delivery system for a gas grill, the grill having a firebox with a front and a back portion, the system comprising:
a plurality of burner tubes that extend into the firebox from the front portion to the back portion;
a gas control valve, the control valve having a gas inlet and a plurality of gas outlets coinciding in number with the plurality of burner tubes;
a gas line from each gas outlet of the control valve to a corresponding burner tube, whereby the amount of gas delivered to a particular burner tube is dependent upon the adjustment of the control valve.

2. The gas delivery system of claim 1 wherein the gas control valve includes a valve stem operably coupled to a control cone having a plurality of apertures, such that the amount of gas delivered to a particular burner tube is adjusted by turning the valve stem and aligning the desired apertures of the control cone with the desired gas outlet of the valve.

3. The gas delivery system of claim 2 wherein adjustment of the gas control valve enables the plurality of burners to provide different gas flows.

4. The gas delivery system of claim 3 wherein adjustment of the gas control valve enables indirect cooking.

5. The gas delivery system of claim 1 wherein the plurality of burner tubes extend into the firebox from one side of the firebox to the other.
